# EUROPÄISCHE PATENTSCHRIFT

(11) **EP 0 907 667 B1**
(45) Veröffentlichungstag und Bekanntmachung des Hinweises auf die Patenterteilung: **10.04.2002**
(21) Anmeldenummer: 97931685.8
(22) Anmeldetag: 26.06.1997
(51) Int. Cl.: C08F 20/04, C14C 9/00

(54) **WÄSSRIGE POLYMERDISPERSIONEN, VERFAHREN ZU IHRER HERSTELLUNG UND IHRE VERWENDUNG IN DER LEDERHERSTELLUNG**
AQUEOUS POLYMER DISPERSION, PROCESS FOR PREPARING THE SAME AND ITS USE IN LEATHER PRODUCTION
DISPERSION AQUEUSE DE POLYMERES, SON PROCEDE DE PRODUCTION ET SON UTILISATION DANS LA PRODUCTION DE CUIRS

(30) Priorität: 28.06.1996 DE 19625984
(43) Veröffentlichungstag der Anmeldung: 14.04.1999
(73) Patentinhaber: STOCKHAUSEN GmbH & Co. KG, 47805 Krefeld (DE)
(72) Erfinder: LOHMANN, Helmut, D-47802 Krefeld (DE); MÜLLER, Thomas, D-40670 Meerbusch (DE); INGER, Waldemar, D-47829 Krefeld (DE); RAMLOW, Stephan, D-47807 Krefeld (DE)
(74) Vertreter: Dannappel, Hans-Jochen, Dr.
(86) Internationale Anmeldenummer: DE9701365
(87) Internationale Veröffentlichungsnummer: WO9800448

(56) Entgegenhaltungen:
- DE-A- 4 224 456
- GB-A- 1 337 084

## Beschreibung

Die Erfindung betrifft wäßrige Polymerdispersionen, die durch Polymerisation von monoethylenisch ungesättigten Säuregruppen tragenden Monomeren in saurer, teilweise oder vollständig neutralisierter Form, gegebenenfalls weiteren, damit copolymerisierbaren Monomeren in Gegenwart von hydrophilisierten pflanzlichen und/oder tierischen und/oder technischen Fetten bzw. Ölen erhältlich sind, ein Verfahren zu ihrer Herstellung, ihre Verwendung bei der Herstellung von Öl-in-Wasser-Emulsionen durch Zusatz einer weiteren Ölphase, gebildet von pflanzlichen, tierischen oder technischen Ölen und/oder Fetten und /oder nicht selbst emulgierenden Silikonen, ihre Verwendung im Bereich der Naßzurichtung von Leder oder Pelzfellen und die mit Hilfe dieser Mittel hergestellten Leder bzw. Pelzfelle.

Im Bereich der Naßzurichtung von Leder ist die Verwendung von säuregruppenhaltigen Polymerisaten zur Erlangung besonderer Ledereigenschaften bekannt. So gibt es verschiedene Veröffentlichungen, die sich auf die Verwendung von hydrophilen, wasserlöslichen Polymeren in der sog. Nachgerbung beziehen. Hierbei steht die Erzielung einer echten zusätzlichen Gerbung im Hintergrund, vielmehr ist das Ziel eine Verbesserung verschiedener Ledereigenschaften wie beispielsweise Reißfestigkeit, Fülle, Farbegalität oder Narbenbild. Beispielhaft für diesen Bereich seien die DE 42 27 974 A1 der Anmelderin und die hierin erwähnten Literaturzitate genannt.

In jüngerer Zeit hat auch die Verwendung von speziellen Polymeren in der Fettung bzw. Hydrophobierung von Leder Verbreitung gefunden. In der Regel handelt es sich bei diesen Produkten um wasserdispergierbare, amphiphile Polymerisate, wie sie beispielsweise in der EP 372 746 beschrieben werden. Obwohl diesen Produkten auch nachgerberische Eigenschaften zugeschrieben werden, so reichen diese bei Alleineinsatz meist nicht aus. Umgekehrt ist es zur Erzielung von besonders weichen Ledertypen auch oftmals notwendig, zusätzlich herkömmliche, dem Fachmann bekannte Fettungsmittel einzusetzen.

Wünschenswert in diesem Zusammenhang wäre eine Kombination von Fettungsmitteln und nachgerberisch wirkenden Polymeren in einem Produkt. Die Praxis hat gezeigt, daß es bei solchen Formulierungen oftmals zu Unverträglichkeiten kommt, die dann zu instabilen, schichtenden Produkten führen.

Die DE-OS 14 94 858 (Priorität: US 3 408 319) beschreibt Gerbmittel, die durch Mischpolymerisation von a) 80 - 90% Acrylsäure, Methacrylsäure oder Gemischen beider und b) 10-20% Sulfierungsprodukten von pflanzlichen oder tierischen Ölen hergestellt werden, wobei die Ölkomponente Doppelbindungen enthalten müssen. Die Mischpolymerisation findet in der Art statt, daß Fettkomponente und Wasser im Reaktor vorgelegt und auf ca. 90°C erhitzt werden. Sodann erfolgt die Dosierung der Initiator- und gegebenenfalls der Reglerkomponenten über einen längeren Zeitraum. Abschließend wird neutralisiert. Die so hergestellten wäßrigen Lösungen werden zur Allein- oder Kombinationsgerbung von Häuten eingesetzt, wobei sie ein Rissigwerden des Lederkorns verhindern sollen. Eine Verwendung solcher Produkte im Bereich der Naßzurichtung wird nicht beschrieben.

Die EP 24 886 beschreibt ein Verfahren zur Gerbung von Leder, wobei in einem ersten Schritt die in üblicher Weise vorbereitete Haut mit einer Polymerdispersion aus Methacrylsäure, Acrylsäure und optional sulfatierten ungesättigten Ölen (gemäß US 3 408 319) wie beispielsweise sulfatiertem Rizinusöl behandelt wird und eine anschließende Behandlung mit einem Mineralgerbstoff, beispielsweise einer Zirkonium-Komponente erfolgt. Man erzielt auf diese Weise sehr feste, harte Leder, die sich beispielsweise für Schuhsohlen eignen. Auch hier ist eine Verwendung im Bereich der Nasszurichtung nicht erwähnt.

Die EP 332 342 beschreibt ein Verfahren zur Verhinderung der Ablagerung von Farbstoffen aus Schmutzkomponenten auf Polyamidmaterialien, wobei in diesem Verfahren die bereits in der EP 24 886 erwähnten Polymerisate Anwendung finden.

E.P.Kaniappan et al. beschreiben in Leather Science, Band 25 (1978) Seite 22-33 und Seite 507-512 die Herstellung von Copolymeren aus Acrylmonomeren, insbesondere Methacrylsäure und sulfatiertem Rizinusöl sowie deren Einsatz bei der Lederherstellung. Die Polymerisation erfolgt durch Vorlage von Fettkomponente und Wasser und Dosierung von Monomer und Initiator bei einer Temperatur von 80°C. Hierbei wird ausdrücklich darauf hingewiesen, daß Rizinusöl für die Untersuchungen ausgewählt wurde, da es aufgrund der chemischen Struktur auch nach der Sulfatierung noch Doppelbindungen besitzt und daher der Copolymerisation zugänglich sei. Mittels IR-Spekten wurde nachgewiesen, daß die Absorptionsbanden der Doppelbindungen nach der Copolymerisation verschwunden sind. Dies bedeutet aber gleichzeitig, daß die Beweglichkeit der Fettkomponente eingeschränkt ist, da sie nun an den Polymerkörper gebunden ist. Daher ist die Eindringtiefe dieser an und für sich guten Fettungsmittel im Leder beschränkt.

Die DE 42 24 456 beschreibt wasserlösliche oder wasserdispergierbare Pfropfpolymere von pflanzlichen oder tierischen Ölen, welche hergestellt werden durch radikalische Polymerisation von a) 20 bis 100% monoethylenisch ungesättigter Carbonsäuren und/oder monoethylenisch ungesättigten Sulfosäuren und/oder monoethylenisch ungesättigten Phosphonsäuren oder deren Alkali, Erdalkali- oder Ammoniumsalzen, b) 0 bis 80 Gew.% weiterer ethylenisch ungesättigter Monomere, die mit den Monomeren a) copolymerisierbar sind und c) 0 bis 5 Gew.% mindestens doppelt ethylenisch ungesättigte nicht konjugierte Monomere in Gegenwart von pflanzlichen und/oder tierischen Ölen, wobei das Verhältnis von Monomeren zu Pfropfgrundlage von 80:20 bis 1:99 betragen kann. Die Polymerisationsreaktion findet gemäß den Ausführungsbeispielen in einer Inertgasatmosphäre ohne Löse- bzw. Dispergiermittel bei ca. 150°C statt, wobei zunächst die Fettkomponente in Kombination mit dem Initiator einer Vorreaktion unterworfen wird und die Monomere später zugegeben werden oder es wird die Fettkomponente vorgelegt und Monomer und Initiator werden anschließend dosiert. Die Monomerdosierung ist bevorzugt. Diese Produkte können zum Fetten und Füllen von Leder eingesetzt werden. Die Verwendung von teilsulfierten Fetten und Ölen ist gemäß den Ausführungen dieser Schrift nicht zu empfehlen, da sie u.a. wegen des hohen Anteils an polaren Gruppen die wasserabstoßenden Eigenschaften eines hydrophobierten Leders zerstören. Den Herstellungsbeispielen ist zu entnehmen, daß sich die erfindungsgemäßen Emulsionen nach der Polymerisation nur durch intensives Rühren bei hoher Scherwirkung (Ultra-Turrax) bilden.

Diese Produkte neigen nach Erfahrungen der Anmelderin insbesondere bei höheren Ölgehalten bei ungenügender Pfropfung ebenso wie nicht miteinander reagierende Komponenten zum Auftrennen, so daß entweder zusätzliche Emulgatoren eingesetzt werden müssen oder aber drastische Reaktionsbedingungen zur Erzielung eines hohen Pfropfgrads angewendet werden müssen. Beide Wege sind jedoch mit Nachteilen behaftet, da die Verwendung von Emulgatoren beispielsweise die Wasserbeständigkeit von hydrophobierten Ledern zerstören kann und andererseits die mit den drastischen Reaktionsbedingungen einhergehenden Nachteile (hohe Reaktionstemperaturen, lange Reaktionszeiten, großer Anteil an Nebenprodukten) aus ökonomischen und ökologischen Gründen nicht wünschenswert sind.

Die EP 606 064 A2 offenbart Copolymere, bestehend aus 1-99 Gew.% (Meth)acrylsäure und 99-1 Gew.% ethylenisch ungesättigten Fettsäurederivaten, wobei hier als Derivate bevorzugt Ester, Amide oder Nitrile verwendet werden. Die Copolymerisate werden in Substanz oder in nichtwäßrigen Lösungsmitteln unter Inertgas mit organischen Peroxiden bei Temperaturen von vorzugsweise 100-180°C hergestellt und dienen anschließend in wäßriger Emulsion als Alleinfettungsmittel für Leder. Die Copolymerisate können auch als fettende Emulgatoren für pflanzliche und /oder tierische Fette, Öle und/oder Wachse eingesetzt werden. Ähnlich wie bei der DE 42 24 456 ist aber auch die Herstellung dieser Produkte aufgrund der erforderlichen hohen Reaktionstemperatur problematisch und mit hohem energetischen Aufwand verbunden und die Lagerstabilität ist beschränkt.

Aufgabe war es daher, geeignete Kombinationen aus Fettkomponente und Polymer bereitzustellen, die die aufgezeigten Nachteile bei der Herstellung und der Stabilität überwinden und die darüber hinaus in der Lage sind, einen bestimmten zusätzlichen Gehalt an hydrophoben Substanzen wie Paraffine, Fette, Öle und insbesondere wasserunlösliche Silikone ohne aufwendige Verfahrensschritte und ohne zusätzliche Emulgatoren stabil zu emulgieren.

Überraschenderweise hat sich nun gezeigt, daß die Polymerisation in wäßriger Lösung oder Dispersion von monoethylenisch ungesättigten Säuregruppen tragenden Monomeren in saurer, teilweise oder vollständig neutralisierter Form, und gegebenenfalls weiteren, damit copolymerisierbaren Monomeren in Gegenwart von hydrophilisierten pflanzlichen und/oder tierischen und/oder technischen Fetten bzw. Ölen, wobei das Gewichtsverhältnis von Monomeren zu Fett oder Öl 20 : 80 bis 80 : 20 beträgt, wäßrige Polymerdispersionen liefert, die die gestellte Aufgabe lösen.

Insbesondere überraschend war die Tatsache, daß trotz verhältnismäßig milder Reaktionstemperaturen immer dann sehr stabile, feinteilige, konzentrierte Emulsionen gewonnen werden konnten, die sich in anwendungstechnischen Versuchen den Produkten des Standes der Technik als überlegen erwiesen, wenn beim Start der Polymerisation die Fettkomponente und zumindest ein überwiegender Teil, vorzugsweise die gesamte Menge der Monomeren vorgelegt wurde. Vor allen Dingen war es überraschend, daß die Verwendung der hydrophilisierten Fette und Öle, im Gegensatz zu den Angaben im Stand der Technik, nicht zu einer Verminderung der hydrophoben Eigenschaften der Leder und Pelze führte. Ebenso überraschend war die Erkenntnis, daß es auf erfindungsgemäße Weise möglich ist, auf die meist stark ungesättigten Öle wie beispielsweise Rizinusöl zu verzichten und auf gesättigte oder schwach ungesättigte Fette als Grundkörper zurückzugreifen. Dies ist im Hinblick auf die Licht- und Wärmestabilität der behandelten Leder von Bedeutung.

Die erfindungsgemäßen Emulsionen eignen sich in hervorragender Weise für die Emulgierung von hydrophoben Substanzen wie beispielsweise Paraffine, Triglyceride pflanzlicher und/oder tierischer Herkunft und/oder Silikone. Die hydrophoben Substanzen können bis zu 40 Gew. % bezogen auf die gesamte resultierende Emulsion eingesetzt werden. Die durch einen minimalen Rühraufwand entstehenden Öl-in-Wasser-Emulsionen zeichnen sich durch eine sehr gute Lagerstabilität aus und sind vorteilhaft im Bereich der Naßzurichtung von Leder und Pelzfellen einzusetzen.

Die Hydrophilisierung der Öle und Fette kann auf verschiedene Art und Weise durchgeführt werden. Prinzipiell sind hierfür alle Reaktionen geeignet, mit denen es gelingt, polare funktionelle Gruppen in einen Fettkörper einzubringen. Als Ausgangsmaterialien bevorzugt sind gesättigte und ungesättigte Fette und Öle tierischer und/oder pflanzlicher Herkunft wie beispielsweise Fischöl, Klauenöl, Kokosfett, Lardöl, Palmöl, Rindertalg, Rizinusöl, Sonnenblumenöl, Tierkörperfette etc.

Es können auch technisch zugängliche C₁₂-C₃₀-Kohlenwasserstoffe bzw. Kohlenwasserstoffgemische für diese Reaktion eingesetzt werden.

Ebenso geeignet sind die nach Verseifung von nativen Fetten und Ölen zugänglichen C₁₂-C₃₀ Fettsäuren wie Laurinsäure, Myristinsäure, Palmitinsäure, Stearinsäure oder Ölsäure. Diese weisen insbesondere bei höheren C-Zahlen meist noch keine ausreichende Hydrophilie auf, um nach beendeter Polymerisation stabile Emulsionen abzugeben.

Auch Fettalkohole und Fettamine bzw. technische Gemische, die entweder aus natürlichen Fettsäuren gewonnen werden oder aber im Falle der Ziegler-Alkohole durch die sogenannte "Aufbau-Reaktion" hergestellt werden, sind in ihrer Hydrophilie noch nicht ausreichend und sind dementsprechend als Ausgangsmaterialien geeignet.

Für die Hydrophilisierung bieten sich wie bereits erwähnt mehrere Möglichkeiten an, die zum großen Teil bereits technisch durchgeführt werden.

Eine bevorzugte Variante ist die Hydrophilisierung durch Sulfonierung, Sulfitierung bzw. Sulfatierung. Hierbei werden die Fettkomponenten mit schwefelhaltigen Verbindungen, beispielsweise mit Schwefelsäure, Chlorsulfonsäure oder Oleum umgesetzt und die Reaktionsprodukte mit wäßriger Lauge neutralisiert. Bei diesen Verfahren werden Sulfat- bzw. Sulfonatgruppen in das Fettmolekül eingebaut. Abhängig vom Grad der Umsetzung bilden sich mit Wasser mehr oder weniger stabile Emulsionen aus. Versuche haben gezeigt, daß selbst beim intensiven Vermischen von stabiler Fettemulsion und Polymerlösung das Produkt nach kurzer Zeit in zwei Phasen auftrennt. Umgekehrt ist es auf die erfindungsgemäße Weise möglich, mit an sich instabilen Fettemulsionen zu stabilen Endprodukten zu kommen, wobei allerdings für den erfindungsgemäßen Gebrauch vorzugsweise solche Produkte in Frage kommen, bei denen die org. gebundene SO₃-Menge mindestens 0,5 % beträgt.

Eine weitere Reaktion zur Hydrophilisierung von Fettkomponenten besteht in der Phosphatierung, bei denen die Edukte mit reaktiven Phosphorkomponenten wie beispielsweise Phosphorpentoxid umgesetzt werden. Vorzugsweise werden für diese Umsetzung Fettalkohole bzw. Fettamine eingesetzt, die dann zu den entsprechenden Phosphorsäureestern bzw. -amiden abreagieren.

Eine Oxidation, vorzugsweise unter Einsatz von geeigneten Katalysatoren, sorgt für die Einführung von Hydroxy- und/oder Carboxylgruppen in Kohlenwasserstoffe und kann daher ebenfalls als Grundlage zur Herstellung der erfindungsgemäßen Polymerdispersionen geeignet sein.

Ebenso geeignet ist eine Alkoxylierung mit Epoxiden wie beispielsweise Ethylenoxid, Propylenoxid und/oder Butylenoxid, wie sie in Tenside 3 (1966) 2, 37 beispielhaft beschrieben ist.

Sämtliche beschriebenen Operationen zur Hydrophilisierung der Fett- bzw. Ölkomponente entsprechen dem Stand der Technik und sind dem Fachmann bekannt.

Es ist für die erfindungsgemäßen Dispersionen nicht erforderlich, daß die hydrophilisierten Fette noch Doppelbindungen besitzen. Derartige Doppelbindungen werden in aller Regel nur unvollständig umgesetzt und können die Licht- und Wärmestabilität der damit behandelten Leder negativ beeinflussen. Aus diesem Grund werden solche Produkte bevorzugt verwendet, deren Jodzahl weniger als 40 und besonders bevorzugt weniger als 20 beträgt, wobei die Kennzahl nach DIN 53 241 Teil 1 bestimmt und auf die eingesetzte Fettkomponente bezogen wird.

Insbesondere geeignet sind auch solche Komponenten, bei denen eine Kombination der beschriebenen Umsetzungen wie beispielsweise Alkoxylierung mit anschließender Sulfatierung/Sulfonierung durchgeführt wurde. Eine solche Kombination ist beispielsweise in der DE 38 26 179 C2 beschrieben.

Die aus den beschriebenen chemischen Umsetzungen resultierenden Produkte werden in der Regel direkt für die eigentliche Polymerisation eingesetzt, es ist aber auch möglich, diese vor ihrem Einsatz in Trennoperationen wie Extraktion, Destillation etc. zu reinigen.

Für die Polymerisation werden die hydrophilisierten Fettkomponenten in einer Menge eingesetzt, daß sich im Endprodukt ein Gewichts-Verhältnis von Monomeren zu hydrophilisierter Fettkomponente von (20 bis 80): (80 bis 20) einstellt mit der Maßgabe, daß sich die Mengen zu 100 Gewichtsteilen ergänzen. Bei niedrigererem Anteil der Fettkomponente, wie sie beispielsweise in der DE 14 94 858 vorgeschlagen wird, ist im allgemeinen der anwendungstechnische Vorteil gegenüber den reinen Polymerdispersionen nicht mehr gegeben, während bei einem höheren Gehalt als 80% der dispergierende Effekt des Polymerisates nicht ausreicht, um genügend stabile Emulsionen herzustellen.

Die Polymerisation wird in wäßriger Lösung oder Dispersion durchgeführt und weist damit gegenüber Polymerisationsverfahren in nichtwäßrigem Medium ökonomische und ökologische Vorteile auf.

Erfindungsgemäß wird die Reaktion in einer adiabatischen Verfahrensweise durchgeführt, bei der die Initiierung bei niedriger Temperatur erfolgt und die entstehende Reaktionswärme für eine Temperaturerhöhung sorgt. Die Starttemperaturen liegen üblicherweise zwischen 0 und 40°C, vorzugsweise zwischen 10 und 30°C. In Abhängigkeit von der Monomerkonzentration im adiabatischen Polymerisationsansatz kann die Starttemperatur niedriger oder höher sein. Hohe Monomerkonzentrationen im Polymerisationsansatz führen zu höheren Endtemperaturen als niedrige Monomerkonzentrationen, üblicherweise liegt sie zwischen 50 und 100°C. Wenn hohe Temperaturen vermieden werden sollen, kann man dem durch eine niedrigere Starttemperatur von deutlich unter 20°C teilweise gegensteuern. Niedrigere Startemperaturen führen häufig auch zu erhöhten Molekulargewichten der Polymerisate.

In einer anderen Ausführungsform der Erfindung, die bei höherkonzentrierten Ansätzen oder bei Polymerisaten mit hohen Monomeranteilen durchgeführt werden kann, werden die Fettkomponenten und der überwiegende Teil der Monomere vorgelegt und die Polymerisationsreaktion gestartet. Nach Erreichen der durch die Polymerisationswärme hervorgerufenen Maximaltemperatur ist es dann möglich, die Reaktion z.B. isotherm weiterzuführen. Die Temperaturen liegen in dem Bereich von 40 bis 130 °C, vorzugsweise zwischen 50 und 110°C. Man gibt dabei die verbliebenen Monomeren des Ansatzes dem zu polymerisierenden Gemisch kontinuierlich oder absatzweise in dem Maße zu, daß die Polymerisation in dem gewünschten Temperaturbereich gut kontrollierbar ist, vorzugsweise über einen Zeitraum von etwa 1 bis 10 Stunden. Für die Stabilität der resultierenden wäßrigen Polymerdispersionen ist es wesentlich, daß mindestens 55 Gew.%, vorzugsweise mindestens 65 Gew.% der Monomeren des Ansatzes gemeinsam mit den hydrophilisierten Fetten und/oder Ölen vorgelegt werden.

Die Initiierung der Polymerisation wird vorzugsweise durch wasserlösliche radikalbildende Systeme ausgelöst. Bevorzugt verwendet, insbesondere bei niedrigen Reaktionstemperaturen, wird ein redoxkatalytisches System, daneben ist auch ein thermisch oder photochemisch induzierter Zerfall von radikalbildenen Peroxid- und/oder Azoverbindungen zum Start der Reaktion möglich, wobei sich die Auswahl des geeigneten Systems nach der vorgesehenen Reaktionstemperatur richtet. Insbesondere bei einer adiabatischen Polymerisation kann es sinnvoll sein, mehrere Initiatoren mit unterschiedlichen Zerfallstemperaturen einzusetzen. Durch eine abschließende Nachinitiierung wird auch der Restmonomergehalt deutlich abgesenkt. Es können auch öllösliche Peroxidbzw. Azoverbindungen für die Polymerisation eingesetzt werden, allerdings führen diese zu meist nicht gewünschten hohen Molmassen der Polymerisate. Für das Verfahren der teilweisen Monomerdosierung hat sich die zeitlich weitgehend parallele Initiatordosierung als vorteilhaft erwiesen. Eine Aufzählung von im Rahmen dieser Erfindung für die Polymerisation einsetzbaren Initiatoren, Initiatorsystemen und Reglern sowie deren Einsatzkonzentrationen findet sich in der DE 42 24 456 Al.

Als Säuregruppen tragende Monomere der Gruppe a) eignen sich beispielsweise Acrylsäure, Methacrylsäure, Vinylessigsäure, Maleinsäure, Fumarsäure, Itaconsäure, Vinylsulfonsäure, Methallylsulfonsäure, 2-Acrylamido-2-methylpropylsulfonsäure, 4-Vinylphenylsulfonsäure, Vinylphosphonsäure sowie deren Gemische bzw. deren Anhydride.

Verwendet werden kann sowohl die freie Säure als auch die teilweise oder vollständig neutralisierte Form. Als Neutralisationsmittel eignen sich Alkali- und/oder Erdalkalihydroxide, Ammoniak, Amine, Polyamine oder Aminoalkohole. Als bevorzugte Monomere werden Acrylsäure, Methacrylsäure, (Meth)allylsulfonsäure und 2-Acrylamido-2-methylpropylsulfonsäure eingesetzt, wobei von denen Acrylsäure und Methacrylsäure besonders bevorzugt sind.

In einer bevorzugten Ausführungsform werden die Monomeren nach a) in einer Menge von 30 bis 100 Gew.% und besonders bevorzugt von 60 bis 100 Gew.% bezogen auf die gesamte Gewichtsmenge der ungesättigten Monomeren eingesetzt.

Die Monomeren der Gruppe b) werden zur Modifizierung der Eigenschaften des Polymerisates benutzt und umfassen alle Comonomeren, die in der Lage sind, mit den Monomeren der Gruppe a) zu copolymerisieren. Bevorzugt werden, insbesondere bei Polymerisation in wäßrigem Medium, wasserlösliche neutrale monoethylenisch ungesättigte Monomere, wie beispielsweise (Meth)acrylamid, (Meth)acrylnitril, (Meth)allylalkohol, Hydroxyethyl(meth)acrylat, Hydroxypropyl(meth)acrylat, Hydroxyalkylpolyethylenoxy(meth)acrylat, Alkyloxypolyethylenoxy(meth)acrylat, Polyethylenglykolmonoallylether, N-Vinylacetamid, N-Vinylpyrrolidon, N-Vinylimidazol verwendet.

Desweiteren ist es in Bezug auf die Anwendungseigenschaften oftmals vorteilhaft, basische Monomere, wie beispielsweise Dimethylaminoalkyl(meth)acrylat oder Dimethylaminoalkyl(meth)acrylamid und/oder deren quaternierte Formen in der Polymerisation einzusetzen.

In einer weiteren bevorzugten Ausführungsform werden Monomere eingesetzt, die sich durch geringe Wasserlöslichkeit auszeichnen, insbesondere dann, wenn sie durch die ebenfalls eingesetzte hydrophilisierte Fettkomponente solubilisiert werden. Beispiele hierfür sind C₁-C₃₀ Alkyl(meth)acrylate, Vinylester von C₁-C₃₀ Carbonsäuren oder Vinylether von C₁-C₃₀ Alkoholen. Die zuvor erwähnten, gering wasserlöslichen Monomere, können auch zur Verbesserung der Weichheit und der Hydrophobierung der Leder und Pelze beitragen.

Die Monomeren nach b) bzw. deren Gemische werden in Mengen von 0 bis 70 Gew.%, vorzugsweise von 0 bis 40 Gew.% bezogen auf die gesamte Gewichtsmenge der ungesättigten Monomeren eingesetzt.

Die Polymerisation kann sowohl bei Normal- als auch bei Über- oder, in speziellen Fällen, auch bei Unterdruck durchgeführt werden. Oftmals ist es von Vorteil, wenn in einer Inertgasatmosphäre unter Ausschluß von Sauerstoff gearbeitet wird. Während der Polymerisation wird im allgemeinen für eine gute Durchmischung der Reaktionsteilnehmer gesorgt.

Die Zahlenmittel der Molmassen der erhaltenen Polymerisate liegen zwischen 1000 und 100.000 g/mol, vorzugsweise zwischen 2000 und 80.000 und besonders bevorzugt zwischen 4000 und 50.000. Ein begrenzender Faktor für die einzustellende Höhe des Molekulargewichtes ist die Viskosität der Emulsion, die um so höher liegt, je größer das Molekulargewicht ist. Es sollte immer gewährleistet sein, daß die Emulsion unter den Verarbeitungsbedingungen fließfähig bleibt, und nicht durch zu hohe Molekulargewichte des Polymerisates pastös oder gar fest wird. Man bestimmt die Molekulargewichte mittels Gelpermeationschromatographie. Die Regelung der Molmassse im Sinne einer Erhöhung oder Erniedrigung erfolgt erfindungsgemäß nach dem Fachmann bekannten Methoden, beispielsweise über die Reaktionsbedingungen, durch die Art und Menge und zeitliche Dosierung des Initiators, durch den Einsatz von Reglern, durch geringe Anteile verzweigend/vernetzend wirkender Monomere. Letztere werden aufgrund ihrer Reaktionsmöglichkeiten entweder während der Polymerisation mit einpolymerisert oder aber nachträglich mit den reaktionsfähigen Gruppen des Polymerisates umgesetzt. Als verzweigend/vernetzend wirkende Monomere kommen beispielsweise die mindestens doppelt ethylenisch ungesättigten Verbindungen und Polyglycidylverbindungen in Frage.

Die erfindungsgemäßen Lösungen bzw. Dispersionen weisen einen Feststoffgehalt von 20 bis 80%, vorzugsweise 40 bis 70 Gew.% auf. Sie können ggf. nach beendeter Polymerisation neutralisiert werden. Geeignete Mittel hierfür sind Alkali- und/oder Erdalkalihydroxide, Ammoniak, Amine, Polyamine oder Aminoalkohole. Die Basenmenge wird so gewählt, daß sich ein anwendungsbezogener pH-Wert einer 10%-wäßrigen Lösung zwischen 3 und 10, vorzugsweise zwischen 5 und 9 einstellt. In jedem Fall ist jedoch darauf zu achten, daß pH-empfindliche Monomerbestandteile im Polymer nicht unbeabsichtigt durch Hydrolyse oder Verseifung geschädigt werden.

In den Fällen, in denen eine Verseifung von Monomerbestandteilen des Polymers gewünscht ist, kann die Emulsion vorübergehend auf dem Fachmann bekannte Verseifungsbedingungen eingestellt werden. Dies kann z. B. erforderlich werden, wenn in einem Copolymer mit Vinylesterbausteinen die Estergruppen in hydrophile Hydroxylgruppen umgewandelt werden sollen.

Die erfindungsgemäßen Emulsionen eignen sich auch zur Emulgierung hydrophober Substanzen. Ein weiterer Gegenstand der Erfindung sind daher auch Mischungen der Emulsionen mit weiteren hydrophoben Substanzen, deren Herstellung und deren Verwendung. Derartige hydrophobe Substanzen werden beispielsweise durch alle diejenigen Fette und Öle bzw. deren Gemische gebildet, die auch bereits als Ausgangsmaterialien für die Hydrophilisierung genannt wurden. Darüber hinaus geeignet sind Polydimethylsiloxane mit einer Viskosität bei 20°C von nicht mehr als 1000 mPas. Ebenso verwendet werden können Phospholipide wie beispielsweise Lecithin.

Die weiteren, der wäßrigen Polymerdispersion zugesetzten hydrophoben Verbindungen machen bis zu 60, vorzugsweise bis zu 40 Gew.-% des Gewichts der wäßrigen Polymerdispersion aus.

Die Herstellung der erfindungsgemäßen Öl-in-Wasser-Emulsionen erfolgt in einfacher Weise durch langsame Zugabe der zusätzlichen Ölphase unter Rühren bei leicht erhöhter Temperatur zur wäßrigen Präemulsion, die wie zuvor beschrieben hergestellt wurde. In einer bevorzugten Ausführungsform liegt die Temperatur bei der Zugabe der Ölphase zwischen 40 und 90°C.

Aufgrund der hervorragenden emulgierenden Eigenschaften der Polymer-Emulsionen ist ein Zusatz von Tensiden bei der Zumischung und Emulgierung der zusätzlichen hydrophoben Ölphase zur Herstellung der erfindungsgemäßen Öl-in-Wasser-Emulsionen normalerweise nicht erforderlich. In Ausnahmefällen, etwa bei ungewöhnlich schwer zu emulgierenden hydrophoben Substanzen, kann es aber durchaus erforderlich sein, daß geringe Mengen eines zusätzlichen Tensids eingesetzt werden müssen.

Gegebenenfalls kann auch noch eine Zugabe von Wasser zur Einstellung der Aktivsubstanz im Produkt durchgeführt werden. Falls die Emulsion vor der Zumischung der hydrophoben Ölphase noch nicht bzw. nur teilweise neutralisiert war, kann die Neutralisation auch nach der Zugabe der zusätzlichen hydrophoben Ölphase erfolgen. Geeignete Mittel für die Neutralisation sind Alkali- und/oder Erdalkalihydroxide, Ammoniak, Amine, Polyamine oder Aminoalkohole. Die Basenmenge wird so gewählt, daß sich ein pH-Wert einer 10%-wäßrigen Lösung bzw. Emulsion zwischen 3 und 10, vorzugsweise zwischen 5 und 9 einstellt.

Insbesondere überraschend war die Tatsache, daß sehr stabile, feinteilige, konzentrierte Emulsionen gewonnen werden konnten, die sich in anwendungstechnischen Versuchen den Produkten des Standes der Technik als überlegen erwiesen. Des weiteren überraschend war die Erkenntnis, daß sowohl die Polymerdispersionen an sich als auch als Bestandteil der Öl-in-Wasser-Emulsionen die negativen Begleiteigenschaften von Tensiden nicht aufweisen, d.h. die Hydrophobizität des Leders nicht verschlechtern, obwohl die eingesetzten hydrophilisierten Fettkomponenten Grenzflächenaktivität besitzen können.

Die ausgezeichnete Salzstabilität der erfindungsgemäßen Polymerdispersionen ermöglicht ihren Einsatz auch in solchen Flotten, in denen aufgrund einer hohen Salzfracht, sei es durch die Wasserqualität oder durch die Lederbehandlungsmittel hervorgerufen, andere, weniger stabile Emulsionen brechen und damit unwirksam werden würden.

Die erfindungsgemäßen Emulsionen ohne und mit zusätzlicher hydrophober Ölphase eignen sich beispielsweise zur Behandlung von Leder und Pelzen. Diese erfolgt vorzugsweise in wäßriger Flotte beispielsweise in einem Gerbfaß. Je nach Einsatzzweck wird eine Menge von 0,1 -20 % Aktivsubstanz, bezogen auf das Falzgewicht des Leders bzw. Trockengewicht des Pelzfelles, verwendet. Die Produkte verleihen dem Leder einen weichen, vollen, angenehmen Griff.

Weitere Anwendungsgebiete, in denen sich die erfindungsgemäßen wäßrigen Polymerdispersionen vorteilhaft anwenden lassen sind die Faser- und Textilausrüstung und der Hautschutz.

Die folgenden Ausführungsbeispiele sollen die Erfindung erläutern, ohne den Erfindungsgedanken einzuschränken. Alle in den Beispielen genannte Zahlenangaben beziehen sich, sofern nicht anders erwähnt, auf Gewichtsmengen.

### Beispiel 1:

In einem Dreihals-Glaskolben mit Rührer und Kühler werden 375 Tl. deionisiertes Wasser, 205 Tl. Acrylsäure, 205 Tl. eines Produktes gemäß Beispiel 1.3 aus der DE 38 26 179 C2 (Jodzahl 30), 0,3 Tl. Mercaptoethanol und 0,01 Tl. Eisen(II) sulfat vorgelegt. Durch gleichzeitige Zugabe einer Lösung von 2,7 Tln. Natriumpersulfat in 10 Tln. Wasser und 2,0 Tln Natriumdisulfit in 7 Tln. Wasser wird die Polymerisation bei 20°C gestartet. Diese erreicht innerhalb von fünf bis 15 Minuten ein Temperaturmaximum von 90 - 100°C. Die Reaktion wird bei 80°C zwei Stunden fortgeführt. Zur Nachkatalyse werden 30 Minuten nach Erreichen der Maximaltemperatur 1 Tl. der Peroxoverbindung in 4 Tln Wasser zugesetzt. Nach zwei Stunden Gesamtreaktionszeit wird die Mischung durch Zugabe von 190 Tln. einer 25%igen Ammoniaklösung neutralisiert, so daß sich ein pH-Wert einer 10%igen Lösung zwischen 6 und 7 einstellt. Man erhält eine leicht gelbliche, feinteilige, fließfähige Emulsion mit ca. 45% Wirksubstanz, die beliebig mit Wasser verdünnbar ist. Die Brookfield-Viskosität beträgt bei 20°C ca. 20.000 mPas, das Zahlenmittel des Molekulargewichtes liegt bei 14280 g/Mol. Das Produkt ist auch nach mehreren Wochen Lagerung bei 50°C nicht aufgetrennt.

### Beispiel 1.1:

Beispiel 1 wird wiederholt, jedoch mit einer auf 2,5 Tle erhöhten Menge an Mercaptoethanol. Die Emulsion ist stabil, hat eine Viskosität von 680 mPas und es wurde ein Zahlenmittel des Molekulargewichts von 8450 g/Mol gemessen.

### Vergleichsbeispiel 1:

Beispiel 1 wird wiederholt, allerdings wird nun ohne das hydrophilisierte Fettprodukt polymerisiert. Man erhält eine leicht trübe, stark viskose Lösung. In diese wird nun unter intensiver Vermischung die dem Beispiel 1 entsprechende Menge des Produktes gemäß Beispiel 1.3 aus der DE 38 26 179 C2 gegeben. Man erhält eine grobe Dispersion, die nach einem Tag Lagerung bei 50°C auftrennt.

### Beispiel 2:

Es wird nach dem Verfahren gemäß Beispiel 1 gearbeitet, als hydrophilisiertes Fett werden 205 Tl. eines Fischölsulfitates mit 4,7 % organisch gebundenem SO₃ und einer Jodzahl von 8 verwendet . Die Emulsion entspricht in ihren Eigenschaften weitgehend jener des Beispiels 1.

### Vergleichsbeispiel 2:

Es wird nach dem Verfahren gemäß Beispiel 1 gearbeitet, anstelle des hydrophilisierten Fettes werden 205 Tl. eines nicht vorbehandelten Fischöles eingesetzt. Das Produkt zeigt bei Lagerung bei 20°C bzw. 50°C instabiles Verhalten.

### Beispiel 3:

Es wird nach dem Verfahren nach Beispiel 1 gearbeitet, vorgelegt werden 335 Tl. Wasser, 145 Tl. Acrylsäure und 367 Tl. eines Produktes nach Beispiel 1.1 der DE 38 26 179 C2 (Jodzahl 56), entsprechend einem Verhältnis Polymer zu hydrophilisiertem Fett von 33,3 zu 66,6%. Es ergibt sich eine stabile dickflüssige Emulsion mit 45% Wirksubstanz.

### Vergleichsbeispiel 3:

Es wird nach dem Verfahren von Beispiel 3 gearbeitet, jedoch mit dem nicht behandelten Tierkörperfett anstelle des hydrophilisierten Produktes. Das frische Polymerisat ist nicht wasserverdünnbar, nach wenigen Tagen erfolgt eine Auftrennung in zwei Phasen.

### Beispiel 4:

In Abänderung des Verfahrens nach Beispiel 1 wurden statt 205 Tln. Acrylsäure jetzt 143,5 Tl. Acrylsäure und 61,5 Tl. Acrylamid (Verhältnis 70:30) als Monomere eingesetzt. Es ergibt sich ein stabiles Produkt, welches bei 50°C eine leichte Tendenz zur Aufrahmung zeigt.

### Beispiel 5:

In das Reaktionsprodukt aus dem Beispiel 1 läßt man unter Rühren bei 30 bis 70 °C 250 Tl. eines paraffinischen Mineralöls (Shell Öl 8703), entsprechend einem Verhältnis von kontinuierlicher Phase zu diskontinuierlicher Ölphase von 80:20, innerhalb von 30 Minuten zulaufen. Man erhält eine leicht gelbliche, feinteilige, fließfähige Emulsion mit ca. 56 % Wirksubstanz, die beliebig mit Wasser verdünnbar ist. Das Produkt ist auch nach mehreren Wochen Lagerung bei 50°C nicht aufgetrennt.

Die in der folgenden Tabelle aufgeführten Beispiele unterscheiden sich von Beispiel 5 in der Art und der Menge der zugesetzten Ölphase. Die Stabilitäten wurden jeweils nach drei Wochen Lagerung beurteilt.

| **BEISPIEL** | **ÖLPHASE [Tle]** | **EMULSIONSSTABILITÄT** | |
|---|---|---|---|
| | | bei 20°C | |
| **6** | 250 Lardöl | ja | |
| **7** | 250 Catenex SM 946¹ | ja | |
| **8** | 430 Catenex SM 946¹ | ja | |

| | | bei 20°C | bei 50°C |
|---|---|---|---|
| **9** | 250 Lecithin | ja | ja |
| **10** | 430 Lecithin | ja | ja |
| **11** | 670 Lecithin | ja | ja |
| **12** | 250 Silikonöl 350² | ja | ja |
| **13** | 250 Paraffin C14-17 | ja | ja |

| | | | |
|---|---|---|---|
| ¹: Paraffinöl mit aromatischen Anteilen, Fa. Shell | | | |
| ²:Poly-(dimethylsiloxan),Viskosität 350 mPas | | | |

In den folgenden Beispielen 14 bis 16 und 19 beziehen sich die %-Angaben auf das Falzgewicht des eingesetzten Leders.

### Beispiel 14:

### Herstellung eines Rindoberleders

Ausgangsmaterial wet-blue, Falzstärke 1,8- 2,0 mm

| | | | |
|---|---|---|---|
| 1) | Waschen | 300 % Wasser 35 °C, | |
| | | 0,5 % Ameisensäure 1:5, | |
| Flotte ablassen | | 0,5 % Entfettungsmittel³, | 15 Min |
| | | | |
| 2) | Neutralisation | 100 % Wasser 35 °C | |
| | | 2 % Natriumformiat, | |
| | | 2 % SELLASOL NG gran.⁴ | 45 bis 60 Min |
| End-pH Flotte 4,3 bis 5,1, | | | |
| Lederquerschnitt gegen Bromkresolgrün: grün-blau | | | |
| Flotte ablassen | | | |
| | | | |
| 3) | Waschen | 300 % Wasser 60 °C | 10 Min |
| Flotte ablassen | | | |
| | | | |
| 4) | Nachgerbung | 100 % Wasser 60 °C | |
| | | 5 % Produkt | |
| | | gemäß Beispiel 1 | 30 Min |
| 5) | Färbung | +1 % SELLAFAST BRAUN HH⁵, 1:30 | 2x10 Min |
| 6) | Fettung | +12 % anionische Fettungsmittelkombination, 1:4 +1 % Ameisensäure 1:5 | 30 Min |
| | | | 30 Min |
| End pH der Flotte 3,5 bis 3,9 | | | |
| Flotte ablassen | | | |
| | | | |
| 7) | Spülen | Wasser 20 °C | 5 Min |
| Leder über Nacht auf Bock, abwelken, vakuumtrocknen (80 °C, 3 Min), hängend austrocknen, anfeuchten, stollen, bügeln | | | |

| | | | |
|---|---|---|---|
| ³: Nichtionische Tensidkombination, Hersteller Chemische Fabrik Stockhausen GmbH, Handelsname Tetralix SMS | | | |
| ⁴:Nachgerbstoff mit starker Neutralisations- und Pufferwirkung, Hersteller Ciba AG, Basel | | | |
| ⁵: Produkt der Ciba AG,Basel | | | |

Als Vergleich wurde eine korrespondierende Lederhälfte mit einem Polymernachgerbstoff gemäß Beispiel 2 der DE 42 27 974 behandelt. Die Beurteilung der Lederhälften erfolgt nach dem Schulnotenprinzip (1= sehr gut, 6= ungenügend)

| | Erfindungsbeispiel | Vergleich |
|---|---|---|
| Weichheit | 2+ | 2 - 3 |
| Egalität | 2 - 3 | 3 - 4 |
| Farbton | | deutlich heller |

Die Bewertung zeigt, daß das erfindungsgemäß behandelte Leder in seinen ledertechnischen Eigenschaften dem Vergleichsleder überlegen ist.

### Beispiel 15:

### Herstellung eines Schaf-Nappa-Leders

Ausgangsmaterial wet-blue, Falzstärke 1,0 -1,2 mm

| | | | |
|---|---|---|---|
| 1) | Waschen | 300 % Wasser 35 °C, | |
| | | 0,5 % Entfettungsmittel³, | 20 Min |
| Flotte ablassen | | | |
| | | | |
| 2) | Neutralisation u. | 100 % Wasser 40 °C | |
| | Nachgerbung | Tannesco HN⁶ | 40 min |
| | | + 3 % Fettungsmittel anionisch | |
| | | + 0,7% Dispergierhilfsmittel | 20 min |
| | | + 2 % Harznachgerbstoff | 10 min |
| | | + 2,5% Natriumformiat | 50 min |
| | | + 4,5 % Produkt gemäß Beispiel 1 | 30 min |
| | | + 0,8% Ameisensäure 1:5 | 20 min |
| Flotte ablassen | | | |
| | | | |
| 3) | Waschen | 300 % Wasser 55 °C | 10 Min |
| Flotte ablassen | | | |
| | | | |
| 4) | Färbung | 100% Wasser 55°C | |
| | | 0,5 % Invaderm LU⁷ | 5 min |
| | | + 3% SELLAFAST BRAUN HH⁵, 1:30 | |
| | | 1 % Baykanol HLX⁹ | |
| | | 0,25% Irgalon ST¹⁰ | 30 min |
| 5) | Fettung | + 8 % anionisches Fettungsmittel 1:4 | 60 min |
| | | + 1,3% Ameisensäure | 30 min |
| End pH der Flotte 3,5 bis 3,9 | | | |
| Flotte ablassen | | | |
| | | | |
| 7) | Spülen | Wasser 25 °C | 5 Min |
| Leder über Nacht auf Bock, abwelken, hängend austrocknen, anfeuchten, stollen, millen, bügeln | | | |

| | | | |
|---|---|---|---|
| ⁶: Lichtechter, chromhaltiger, synthetischer Nachgerbstoff der Fa.Ciba AG, Basel | | | |
| ⁷: Farbstoffaffines, lichtechtes Einfärbe- und Egalisierhilfsmittel für die Lederfärbung der Fa. Ciba AG, Basel | | | |
| ⁹: Anionisches Färbereihilfsmittel der Fa. Bayer AG | | | |
| ¹⁰: Sequestriermittel zur Bindung störender Schwermetall- und Erdalkaliionen der Fa. Ciba AG, Basel | | | |

Eine korrespondierende Hälfte eines Schaffelles wurde mit einem handelsüblichen polymeren Nachgerbstoff anstelle des erfindungsgemäßen Produktes behandelt (Magnopal® 5067, Chem. Fabrik Stockhausen GmbH)

| | Erfindungsbeispiel | Vergleich |
|---|---|---|
| Weichheit | 2+ | 2 |
| Egalität | 3 | 3 |
| Farbton | | dunkler |

Das erfindungsgemäße Leder zeichnet sich durch eine verbesserte Weichheit aus.

### Beispiel 16: Herstellung eines hydrophobierten Oberleders

Ausgangsmaterial Rindhaut, wet-blue, Falzstärke 1,8-2,0 mm

| | | | |
|---|---|---|---|
| 1) | Nachgerbung I | 200 % Wasser 45 °C, | |
| | | 2% Chromosal B¹¹ | |
| | | 0,5 % Blancorol RC¹², | 15 Min |
| Flotte ablassen | | | |
| | | | |
| 2) | Neutralisation | 100 % Wasser 35 °C | |
| | | 1 % Natriumformiat | 30 min |
| | | + 0,3 % Natriumbicarbonat | 60 min |
| über Nacht automatische Faßbewegung | | | |
| Flotte ablassen | | | |
| | | | |
| 3) | Nachgerbung II | 100 % Wasser 35 °C | |
| | | 5 % Produkt | |
| | | gemäß Beispiel 1 | 30 Min |
| 4.) | Färbung | 1 % SELLAFAST BRAUN HH⁵, 1:30 | 2x10 Min |
| | | 3 % Mimosa | |
| | | 3,5 % IRGATAN FB fl¹³ | 30 min |
| | | + 1 % SELLAFAST BRAUN HH⁵, 1:30 | 30 min |
| Flotte ablassen | | | |
| | | | |
| 5) | Spülen | Wasser 60°C | 10 min |
| 6) | Hydrophobierung | 100% Wasser 60°C | |
| | | 10% Eupilon WAS-1¹⁴ 1:4 | 60 min |
| | | + 1 % Ameisensäure 1:5 | 30 min |
| Flotte ablassen | | | |
| | | | |
| 7) | Waschen | 300% Wasser 35 °C | 10 min |
| 8) | Fixierung | 100% Wasser 35°C | |
| | | 0,5 % Ameisensäure 1:5 | 5 min |
| | | 3 % Chromosal B¹¹ | 60 min |
| Leder über Nacht auf Bock, abwelken, ausrecken, vakuumtrocknen (2 min 80°C), anfeuchten, stollen. | | | |

| | | | |
|---|---|---|---|
| ¹¹: Basischer Chromgerbstoff der Fa. Bayer AG | | | |
| ¹²: Chromhaltiger Nachgerbstoff der Fa. Bayer | | | |
| ¹³: Synthetischer Gerbstoff für die Nachgerbung von Chromleder der Ciba AG, Basel | | | |
| ¹⁴: Hydrophobiermittel der Chem. Fabrik Stockhausen | | | |

Als Vergleichsprodukt wurde wiederum ein Produkt nach Beispiel 2 der DE 42 27 974 Al angewendet. Mit dem erfindungsgemäßen Produkt erzielt man neben einer verbesserten Weichheit auch eine deutlich verbesserte Hydrophobierung, erkennbar an der höheren Anzahl der Maeser-Flexe.

| | Erfindungsbeispiel | Vergleich |
|---|---|---|
| Weichheit | 2+ | 2 - 3 |
| Farbton | | etwas heller |
| Bally-Penetrometer* | | |
| (10% Stauchung) | kein Wasserdurchtritt nach 7 Stunden | |
| Maeser-Test** | 74.000/145.500 | 12.600/60.000 |

| | | |
|---|---|---|
| * : Bally-Penetrometer ( Lange, J., "Qualitätsbeurteilung von Leder, Lederfehler, Lederlagerung und Lederpflege", Bd. 10 aus "Bibliothek des Leders", Umschau Verlag 1982, S. 119 - 123 und "Bestimmung des Verhaltens gegenüber Wasser bei dynamischer Beanspruchung im Penetrometer", DIN 53 338, April 1976) | | |
| **: Maeser-Testgerät ( "Dynamic Water Resistance of Shoe Upper Leather by the Maeser Water Penetration Tester", ASTM D 2099 - 70 und Lange, J., "Qualitätsbeurteilung von Leder, Lederfehler, Lederlagerung und Lederpflege", Bd. 10 aus "Bibliothek des Leders", Umschau Verlag 1982, S. 124) | | |

Die beiden erwähnten Prüfmethoden zur Ermittlung der Hydrophobizität des Leders sind von dynamischer Art, d.h. die Wasseraufnahme wird unter ständiger Biege- bzw. Stauchbeanspruchung der Lederproben bestimmt. Die Angabe der Stauchungsamplitude, der Zeit bis zum Wasserdurchtritt und der Wasseraufnahme innerhalb bestimmter Zeitintervalle gemäß der Bally-Penetrometer-Messung lassen eine stichhaltige Beurteilung für den Gebrauchswert einer hydrophoben Lederausrüstung zu. Vorgaben bei der Stauchung von 10% müssen nach heutigen Standards erfüllt werden, wobei die Prüfzeiten über 6 Stunden liegen und die Wasseraufnahme unter 20% sein soll. Bezüglich der "Maeserflexe" muß für eine gute Vollhydrophobierung ein Wert von mindestens 50000 erreicht werden.

### Beispiel 17:

Die Herstellung erfolgt wie in Beispiel 1, jedoch wird die Neutralisation mit einer äquimolaren Menge Natronlauge statt Ammoniak durchgeführt und das Produkt auf 30% Wirksubstanz eingestellt. Man erhält eine dünnflüssige und stabile Emulsion.

### Beispiel 18:

Die Herstellung erfolgt wie in Beispiel 17, jedoch wird statt des doppelt hydrophilisierten (oxalkyliert/sulfoniert) Fettes gemäß Beispiel 1.3 aus der DE 38 26 179 ein einfach hydrophilisiertes (oxalkyliert) Fett gemäß Beispiel 1.1 mengengleich eingesetzt. Man erhält eine dünnflüssige und stabile Emulsion.

### Beispiel 19:

### Herstellung eines Rindnappaleders

Ausgangsmaterial: Rind, wet-blue, Stärke 1,1 - 1,2 mm

| | | | |
|---|---|---|---|
| 1) | Nachgerbung | 200 % Wasser, 40°C | |
| | | 2,0% Chromosal B¹¹ | |
| | | 2,0% Blancorol RC¹², | 60 Min |
| Flotte ablassen | | | |
| | | | |
| 2) | Neutralisation | 200 % Wasser, 35°C | |
| | | 2 % Natriumformiat, | |
| | | 2 % Sellasol NG gran.⁴ | 30 min |
| | | + 1 % Natriumbicarbonat (1:10) | 45 min |
| pH Flotte 6,6, | | | |
| Lederquerschnitt gegen Bromkresolgrün: blau | | | |
| | | + 3 % Irgatan RL fl. ¹⁵ | 30 min |
| Flotte ablassen | | | |
| | | | |
| 3) | Waschen | 300 % Wasser, 60 °C | 10 Min |
| Flotte ablassen | | | |
| | | | |
| 4) | Fettung | 100 % Wasser 60°C | |
| | | 13,6 % Produkt gemäß Beispiel 17 | |
| | | bzw. Beispiel 18 | 60 Min |
| | | +1,5 % Ameisensäure 1:5 | 30 Min |
| End pH der Flotte 3,8 bis 4,2 | | | |
| Flotte ablassen | | | |
| | | | |
| | | | |
| 7) | Spülen | Wasser 20 °C | 5 Min |
| Leder über Nacht auf Bock, abwelken, naß gespannt trocknen, anfeuchten, stollen, millen, spannen | | | |

| | | | |
|---|---|---|---|
| ¹⁵: lichtechter synthetischer Nachgerbstoff der Fa. Ciba AG, Basel | | | |

Prüfung der Ledereigenschaften in Abhängigkeit von der in der Fettung eingesetzten erfindungsgemäßen Polymerisate 17 bzw. 18:

| | **Weichheit** | **Narbenbild** |
|---|---|---|
| **Polymer 17** | 2 | fein, egal |
| **Polymer 18** | 3 | fein, leicht unegal |

Das Beispiel verdeutlicht die anwendungstechnischen Vorteile von Polymerisaten, bei denen die Fettkomponente durch eine Kombination von Oxalkylierung und Sulfatierung/Sulfonierung doppelt hydrophilisiert wurde (Polymer 17) gegenüber Produkten mit einfach oxalkylierten Fettkomponenten (Polymer 18).

### Beispiel 20:

Die Herstellung gleicht jener des Beispiels 1, jedoch werden statt 205 Teilen Acrylsäure lediglich 184,5 Teile eingesetzt und zusätzlich 20,5 Teile Natriummethallylsulfonat. Man erhält eine feindisperse, stabile Emulsion mit einem pH-Wert von 5,5.

### Vergleichsbeispiel 4:

Hier wurde ein Polymerisat gemäß Beispiel 4 der DE-OS 14 94 858 mit Fischölsulfitat (92% WS, Jodzahl 73 bezogen auf WS) nachgestellt. Es entstand eine rotbraune Dispersion mit einem pH-Wert von 1,8, einer Viskosität von 3450 mPas und einem Feststoffgehalt von 33,2 %. Die Jodzahl des Polymerisates betrug 8,5, d.h. eine Polymerisation der Doppelbindungen des Fischölsulfitates hat nicht stattgefunden.

### Vergleichsbeispiel 4.1:

Das Polymerisat aus dem Vergleichsbeispiel 4 wird mit Natronlauge auf pH 5,5 eingestellt.

### Vergleichsbeispiel 5:

Hier wurde ein Polymerisat gemäß Beispiel 4 der DE-OS 14 94 858 mit Fischölsulfonat (87% WS, Jodzahl 76 bezogen auf WS) nachgestellt. Es entstand eine dunkelbraune Dispersion mit einem pH-Wert von 1,9, einer Viskosität von 980 mPas und einem Feststoffgehalt von 32,1 %. Die Jodzahl des Polymerisates betrug 9,2, d.h. eine Polymerisation der Doppelbindungen des Fischölsulfonates hat nicht stattgefunden.

### Vergleichsbeispiel 5.1:

Das Polymerisat aus dem Vergleichsbeispiel 5 wird mit Natronlauge auf pH 5,5 eingestellt.

### Beispiel 21:

Beispiel 1 wird mit geänderter Monomer- und Fettzusammensetzung wiederholt, d.h. statt reiner Acrylsäure wird ein Gemisch aus 90 Tln. Acrylsäure und 10 Tln. Methacrylsäure und als Fettkomponente wird ein Fischölsulfitat gemäß Vergleichsbeispiel 4 eingesetzt. Es entstand eine braune pastöse Dispersion mit einem pH-Wert von 6,1, einer Viskosität von >100000 mPas und einem Wirkstoffgehalt von 44,5 %. Da die Jodzahl des Polymerisates (14,2) dem Anteil der Doppelbindungen der eingebrachten Fettkomponente entsprach, hat eine Polymerisation der Doppelbindungen des Fischölsulfitates nicht stattgefunden.

### Beispiel 22:

Beispiel 1 wird mit geänderter Monomer- und Fettzusammensetzung wiederholt, d.h. statt reiner Acrylsäure wird ein Gemisch aus 90 Tln. Acrylsäure und 10 Tln. Methacrylsäure und als Fettkomponente wird ein Fischölsulfat gemäß Vergleichsbeispiel 4 eingesetzt. Es entstand eine braune pastöse Dispersion mit einem pH-Wert von 6,2, einer Viskosität von >100000 mPas und einem Wirkstoffgehalt von 42,6 %. Da die Jodzahl des Polymerisates (15,0) dem Anteil der Doppelbindungen der eingebrachten Fettkomponente entsprach, hat eine Polymerisation der Doppelbindungen des Fischölsulfitates nicht stattgefunden.

### Beispiel 23:

Die erfindungsgemäßen Produkte nach Beispiel 21 und 22, sowie die Produkte nach den Vergleichsbeispielen 4 und 5 werden in einer Schafnapparezeptur entsprechend Beispiel 15 eingesetzt. Leder, die mit den erfindungsgemäßen Produkten behandelt wurden, zeichneten sich durch eine größere Weichheit aus.

| **Polymerisat** | **Weichheit** |
|---|---|
| Beispiel 1 | 2+ |
| Beispiel 21 | 2 bis 2- |
| Beispiel 22 | 2 bis 2- |
| Vergleich 4 | 2-3 |
| Vergleich 5 | 2-3 |

### Beispiel 24:

In einem Dreihals-Glaskolben mit Rührer und Kühler werden 254 Tl. deionisiertes Wasser, 123 Tl. Acrylsäure, 67 Tl. eines Produktes gemäß Beispiel 1.3 aus der DE 38 26 179 C2 (Jodzahl 30), 0,3 Tl. Mercaptoethanol und 0,01 Tl. Eisen(II) sulfat vorgelegt. Durch gleichzeitige Zugabe einer Lösung von 2Tln. Natriumpersulfat in 10 Tln. Wasser und 1,5 Tln Natriumdisulfit in 7 Tln. Wasser wird die Polymerisation bei 20°C gestartet. Diese erreicht innerhalb von fünf bis 15 Minuten ein Temperaturmaximum von 90 - 100°C. nach Erreichen der Maximaltemperatur wurden weiter 100 Teile Acrylsäure innerhalb von 15 Minuten zudosiert. Die Reaktion wird bei 80°C zwei Stunden fortgeführt. Zur Nachkatalyse werden 30 Minuten nach Ende der Acrylsäure-Dosierung 1 Tl. der Peroxoverbindung in 4 Tln Wasser zugesetzt. Nach zwei Stunden Gesamtreaktionszeit wird die Mischung durch Zugabe von 205 Tln. einer 25 %igen Ammoniaklösung neutralisiert, so daß sich ein pH-Wert einer 10 %igen Lösung zwischen 6 und 7 einstellt. Man erhält eine leicht gelbliche, feinteilige, fließfähige Emulsion mit ca. 55 % Wirksubstanz, die beliebig mit Wasser verdünnbar ist.. Das Produkt ist auch nach mehreren Wochen Lagerung bei 50°C nicht aufgetrennt und zeigt eine sehr gute Glaubersalzstabilität.

### Beispiel 25:

Hier wird die Monomer- und Fettzusammensetzung des Vergleichsbeispiels 5 unter den erfindungsgemäßen Herstellungsbedingungen eingesetzt.
In einem Dreihals-Glaskolben mit Rührer und Kühler werden 380 Tl. deionisiertes Wasser, 180 Tl. Methacrylsäure, 20 Tl. Acrylsäure, 52 Tl. eines Fischölsulfonats und 4,3 Tl. Hydroxylamin vorgelegt. Durch Zugabe einer Lösung von 60 Tln. einer 3 %igen Wasserstoffperoxidlösung wird die Polymerisation bei 20°C gestartet. Diese erreicht innerhalb von 5 bis 15 Minuten ein Temperaturmaximum von 60-70°C. Zur Nachkatalyse werden 30 Minuten nach Erreichen der Maximaltemperatur 10 Tl. der Peroxidlösung zugesetzt. Die viskose Mischung wird weitere 90 Minuten bei 80°C gerührt. Das Produkt hat einen pH-Wert von 2,0 und ist in Wasser klar löslich.

### Beispiel 25.1:

Ein Teil des Produktes aus Beispiel 25 wird mit 50 %iger Natronlauge auf pH 6 eingestellt. Man erhält eine leicht gelbliche, feinteilige, viskose Emulsion mit ca. 45 % Wirksubstanz, die beliebig mit Wasser verdünnbar ist.

Die **Beispiele 25 und 25.1** weisen dieselbe Monomerzusammensetzung wie die Vergleichsbeispiele 5 bzw. 5.1 auf, die erfindungsgemäßen Produkte zeichnen sich jedoch durch eine verbesserte Glaubersalzstabilität aus.

### Beispiel 26:

Messung der Glaubersalzstabilität: Eine Lösung von 60 g Glaubersalz (Natriumsulfat) auf 1 Liter Lösung wird auf 60°C erwärmt, anschließend wird die Testsubstanz eingerührt, so daß eine 20 Gew.%ige Emulsion (bezogen auf Produkt) entsteht. Die Lösung wird ggf. anschließend mit Ameisensäure auf pH 3,5 bis 4,0 eingestellt und nach dem Abkühlen auf Raumtemperatur die Emulsionsstabilität visuell beurteilt.

Diese Prüfung ist insbesondere dann von Bedeutung, wenn die Behandlungsflotten der Lederherstellung größere Mengen Salz enthalten. Diese Salzmengen können bei ungenügender Stabilität der Emulsion dazu führen, daß diese koaguliert und unwirksam wird. Häufig enthalten die Lederfarbstoffe große Mengen Glaubersalz als Stellmittel.

### Beurteilung:

| **Polymerisat** | **Stabilität** |
|---|---|
| Beispiel 1 | ++ |
| Beispiel 17 | ++ |
| Beispiel 18 | ++ |
| Beispiel 24 | ++ |
| Beispiel 25 | + |
| Beispiel 25.1 | ++ |
| Vergleich 4 | - |
| Vergleich 4.1 | + |
| Vergleich 5 | - |
| Vergleich 5.1 | + |
| Fischölsulfitat | -- |
| ++: sehr feine Emulsion, auch nach 7 Tagen noch stabil | |
| +: stabile Emulsion, neigt jedoch nach 2 Stunden zur Aufrahmung | |
| -: instabile Emulsion, trennt nach 10 Minuten auf | |
| --: bildet keine O/W- sondern W/O-Emulsion | |

Überraschendes Resultat dieses Versuches ist, daß die an sich nicht in dieser Lösung emulgierbaren Fettkomponenten nach dem erfindungsgemäßen Produkten besser in Wasser emulgiert werden als die nach dem in der DE 14 94 858 beschriebenen.

## Patentansprüche

1. Verfahren zur Herstellung einer wäßrigen Polymerdispersion durch Polymerisation von
a) monoethylenisch ungesättigten Säuregruppen in teilweise oder vollständig neutralisierter Form in Gegenwart von hydrophilisierten pflanzlichen und/oder tierischen und/oder technischen Fetten oder Ölen
mit gegebenenfalls
b) weiteren mit den Monomeren a) copolymerisierbaren Monomeren, **dadurch gekennzeichnet, daß** das Gewichtsverhältnis von Monomeren a) + b) zu hydrophilisiertem Fett oder Öl von 20:80 bis 80:20 beträgt, und daß die Gesamtmenge an hydrophilisierten pflanzlichen und/oder tierischen und/oder technischen Fetten oder Ölen sowie ein überwiegender Teil oder die gesamte Menge der Monomeren a) und gegebenenfalls b) in wäßriger Lösung/Dispersion, gegebenenfalls zusammen mit einem Regler vorgelegt wird, sodann die Polymerisation mit wasserlöslichen Redoxsystemen initiiert wird, der Polymerisationsansatz adiabatisch erwärmt und gegebenenfalls das restliche Monomer zugesetzt wird.

2. Verfahren nach Anspruch 1, **dadurch gekennzeichnet, daß** nach der adiabatischen Erwärmung weiterer Initiator nachgesetzt wird.

3. Verfahren nach einem der Anspruche 1 - 2, **dadurch gekennzeichnet, daß** nach Erreichen der durch adiabatische Erwärmung hervorgerufenen Maximaltemperatur die Polymerisation isotherm weitergeführt wird.

4. Verfahren nach einem der Ansprüche 1 - 3, **dadurch gekennzeichnet, daß** mindestens 55 Gew.-%, vorzugsweise mindestens 65 Gew.-%, der Monomeren a) und gegebenenfalls b) gemeinsam mit den hydrophilisierten Fetten und/oder Ölen vorgelegt werden.

5. Verfahren nach einem der Ansprüche 1 - 4, **dadurch gekennzeichnet, daß** 30 bis 100 Gew.% Monomere a) mit 0 bis 70 Gew.% damit copolymerisierbaren Monomeren b) mit der Maßgabe polymerisiert werden, daß die Summe der Gewichtsprozente aus Monomeren a) + b) 100 % beträgt.

6. Verfahren nach einem der Ansprüche 1 - 5, **dadurch gekennzeichnet, daß** 60 - 100 Gew-% Monomere a) mit 0 - 40 Gew.-% Monomeren b) polymerisiert werden

7. Verfahren nach einem der Ansprüche 1 - 6, **dadurch gekennzeichnet, daß** als Monomere a) Acrylsäure, Methacrylsäure, Allylsulfonsäure, Methallylsulfonsäure und/oder 2-Acrylamido-2-methylpropylsulfonsäure verwendet werden.

8. Verfahren nach einem der Ansprüche 1 bis 7, **dadurch gekennzeichnet, daß** als hydrophilisierte Fett- bzw. Ölkomponente Produkte einer Jodzahl kleiner 40, vorzugsweise kleiner 20 verwendet werden, wobei die Kennzahl nach DIN 53 241 Teil 1 bestimmt worden ist.

9. Verfahren nach einem der Ansprüche 1 bis 8, **dadurch gekennzeichnet, daß** die Fett- bzw. Ölkomponenten durch Sulfonierung oder Sulfitierung oder Sulfatierung oder Alkoxylierung hydrophilisiert sind.

10. Verfahren nach einem der Ansprüche 1 bis 9, **dadurch gekennzeichnet, daß** die Fett- bzw. Ölkomponente durch eine Kombination von Oxalkylierung und Sulfatierung oder Sulfonierung oder Sulfitierung doppelt hydrophilisiert ist.

11. Verfahren nach einem der Ansprüche 1 - 10, **dadurch gekennzeichnet, daß** die Säuregruppen der monoethylenisch ungesättigten Monomeren a) vor, während oder nach erfolgter Polymerisation zumindest teilweise neutralisiert werden.

12. Verfahren nach einem der Ansprüche 1 - 11, **dadurch gekennzeichnet, daß** die Polymerisationsdauer 1 bis 10 Stunden beträgt.

13. Verfahren nach einem der Ansprüche 1 - 12, **dadurch gekennzeichnet, daß** die Polymerisation bei Temperaturen von 0 - 40 °C, vorzugsweise 10 - 30 °C initiiert wird.

14. Verfahren nach einem der Ansprüche 1 - 13, **dadurch gekennzeichnet, daß** die Polymerisation nach Erreichen der durch die Polymerisationswärme hervorgerufenen Maximaltemperatur isotherm fortgesetzt wird.

15. Verfahren nach einem der Ansprüche 1 bis 14, **dadurch gekennzeichnet, daß** nach Vollendung der Polymerisation die Mischung auf einen pH-Wert im Bereich von 5 bis 9 eingestellt wird.

16. Verfahren nach Anspruch 15, **dadurch gekennzeichnet, daß** der Polymerisationsansatz mit wäßrigem Ammoniak oder wäßrigem Alkali auf einen pH-Wert zwischen 6 und 7 eingestellt wird.

17. Verfahren nach einem der Ansrpüche 1 - 16, **dadurch gekennzeichnet, daß** nach der Polymerisation wenigstens eine hydrophobe Verbindung in einer Gesamtmenge von bis zu 60 Gew.-%, vorzugsweise bis zu 40 Gew.-%, bezogen auf das Gewicht der Polymerdispersion zugemischt wird.

18. Verfahren nach Anspruch 17, **dadurch gekennzeichnet, daß** die hydrophobe Verbindung aus der Gruppe der Polysiloxane, der pflanzlichen Fette/Öle, der tierischen Fette/Öle und der technischen Fette/Öle ausgewählt wird.

19. Wäßrige Polymerdispersion, erhältlich durch Polymerisation nach den Ansprüchen 1 bis 16 von a) monoethylenisch ungesättigten Säuregruppen tragenden Monomeren in Gegenwart von hydrophilisierten pflanzlichen und/oder tierischen und/oder technischen Fetten oder Ölen
gegebenenfalls mit
b) weiteren mit a) copolymerisierbaren Monomeren.

20. Wäßrige Polymerdispersion nach Anspruch 19, **dadurch gekennzeichnet, daß** die wäßrige Polymerdispersion eine oder mehrere zusätzliche hydrophobe Verbindungen in einer Gesamtmenge von bis zu 60 Gew.-%, vorzugsweise bis zu 40 Gew.-%, bezogen auf das Gewicht der Polymerdispersion, in emulgierter Form enthält.

21. Wäßrige Polymerisation nach Anspruch 20, **dadurch gekennzeichnet, daß** die hydrophoben Verbindungen aus der Gruppe der Polysiloxane, der pflanzlichen Fette/Öle, der tierischen Fette/Öle und der technischen Fette/Öle ausgewählt sind.

22. Verwendung der wäßrigen Polymerdispersionen nach einem der Ansprüche 1 bis 16 zur Emulgierung hydrophober Verbindungen.

23. Verwendung der wäßrigen Polymerdispersionen nach einem der Ansprüche 1 bis 21 bei der Herstellung und Verarbeitung von Leder und Pelzen.

## Claims

1. A process for the manufacture of an aqueous polymer dispersion by polymerization of
a) monoethylenically unsaturated acid groups in partially or wholly neutralized form in the presence of hydrophilized vegetable and/or animal and/or technical fats or oils
if necessary with
b) further monomers copolymerizable with monomer a), comprising a weight ratio of monomers a) + b) to hydrophilized fat or oil which amounts to 20:80 to 80:20 and the total volume of hydrophilized vegetable and/or animal and/or technical fats or oils as well as the predominant or total volume of monomer a) and if necessary b) being added in aqueous solution/dispersion, if necessary together with a regulator, the polymerization then being initiated with water-soluble redox systems, the polymerization formulation being adiabatically heated and, if necessary, the remaining monomer being added.

2. A process according to claim 1, comprising a further initiator being added after adiabatic heating.

3. A process according to one of claims 1-2, comprising the isothermal continuation of polymerization after the maximum temperature achieved by adiabatic heating has been reached.

4. A process according to one of claims 1-3, comprising at least 55% by weight, preferably at least 65% by weight of monomer a) and if necessary b) being added together with the hydrophilized fats and/or oils.

5. A process according to one of claims 1-4, comprising 30 to 100% by weight of monomer a) being polymerized with 0 to 70% by weight of monomer b) which is co-polymerizable therewith, the sum of the weight percentages of monomer a) + b) being 100%.

6. A process according to one of claims 1-5, comprising the polymerization of 60-100% by weight of monomer a) with 0 to 40% by weight of monomer b).

7. A process according to one of claims 1-6, comprising the use of acrylic acid, methacrylic acid, allylsulfonic acid, methallylsulfonic acid and/or 2-acrylamido-2-methylpropylsulfonic acid as monomer a).

8. A process according to one of claims 1-7, comprising the use of products with an iodine value of less than 40, preferably less than 20, as hydrophilized fat or oil components, this value being determined according to DIN 53 241, Part 1.

9. A process according to one of claims 1-8, comprising hydrophilization of the fat or oil components by sulfonation or sulfitation or sulfation or alkoxylation.

10. A process according to one of claims 1-9, comprising double hydrophilization of the fat or oil components by a combination of oxalkylation and sulfation or sulfonation or sulfitation.

11. A process according to one of claims 1-10, comprising at least partial neutralization of the acid groups of monethylenically unsaturated monomer a) before, during or after polymerization.

12. A process according to one of claims 1-11, comprising polymerization of 1 to 10 hours' duration.

13. A process according to one of claims 1-12, comprising the initiation of polymerization at temperatures of 0-40°C, preferably 0-30°C.

14. A process according to one of claims 1-13, comprising the isothermal continuation of polymerization after the maximum temperature produced by the heat of polymerization has been attained.

15. A process according to one of claims 1-14, comprising adjustment of the mixture to a pH value in the range of 5 to 9 after the completion of polymerization.

16. A process according to claim 15, comprising adjustment of the polymerization formulation to a pH value between 6 and 7 with aqueous ammonia or aqueous alkali.

17. A process according to one of claims 1-16, comprising addition to the mixture, after polymerization, of at least one hydrophobic compound in a total volume of up to 60% by weight, preferably up to 40% by weight, in relation to the weight of the polymer dispersion.

18. A process according to claim 17, comprising the selection of the hydrophobic compound from the group of polysiloxanes, vegetable fats/oils, animal fats/oils and technical fats/oils.

19. An aqueous polymer dispersion, obtainable by polymerization according to claims 1 to 16 of a) monomers carrying monoethylenically unsaturated acid groups in the presence of hydrophilized vegetable and/or animal and/or technical fats or oils
if necessary with
b) further monomers copolymerizable with a).

20. An aqueous polymer dispersion according to claim 19, comprising the presence in the aqueous polymer dispersion of one or several additional hydrophobic compounds in emulsified form in a total volume up to 60% by weight, preferably up to 40% by weight, in relation to the weight of the polymer dispersion.

21. Aqueous polymerization according to claim 20, comprising the selection of the hydrophobic compounds from the group of polysiloxanes, vegetable fats/oils, animal fats/oils and technical fats/oils.

22. Use of the aqueous polymer dispersions according to one of claims 1-16 for the emulsification of hydrophobic compounds.

23. Use of the aqueous polymer dispersions according to one of claims 1-21 in the manufacture and processing of leather, hides and skins.

## Revendications

1. Procédé de production d'une dispersion aqueuse de polymères par polymérisation
a) de monomères à groupes acides à insaturation monoéthylénique, sous forme partiellement ou totalement neutralisée, en présence de graisses ou d'huiles végétales et/ou animales et/ou techniques rendues hydrophiles
avec éventuellement
b) d'autres monomères copolymérisables avec les monomères a), **caractérisé en ce que** la proportion en poids des monomères a) + b) par rapport à la graisse ou l'huile rendue hydrophile est de 20/80 à 80/20 et **en ce que** la quantité totale de graisses ou d'huiles végétales et/ou animales et/ou techniques rendues hydrophiles ainsi qu'une part prépondérante ou la quantité totale des monomères a) et éventuellement b) est apportée en solution/dispersion aqueuse, éventuellement avec un régulateur, puis la polymérisation est amorcée avec des systèmes redox solubles dans l'eau, la préparation de polymérisation subit un échauffement adiabatique et éventuellement le monomère résiduel est ajouté.

2. Procédé selon la revendication 1, **caractérisé en ce qu'**un autre amorceur est ajouté après l'échauffement adiabatique.

3. Procédé selon l'une des revendications 1-2, **caractérisé en ce qu'**après obtention de la température maximale provoquée par l'échauffement adiabatique, la polymérisation est poursuivie de façon isotherme.

4. Procédé selon l'une des revendications 1-3, **caractérisé en ce qu'**au moins 55 % en poids, de préférence au moins 65 % en poids, des monomères a) et éventuellement b) sont ajoutés conjointement avec les graisses et/ou huiles rendues hydrophiles.

5. Procédé selon l'une des revendications 1-4, **caractérisé en ce que** 30 à 100 % en poids des monomères a) sont polymérisés avec 0 à 70 % en poids des monomères b) copolymérisables avec eux, de façon à ce que le total des pourcentages en poids des monomères a) + b) soit de 100 %.

6. Procédé selon l'une des revendications 1-5, **caractérisé en ce que** 60 à 100 % en poids des monomères a) sont polymérisés avec 0 à 40 % en poids des monomères b).

7. Procédé selon l'une des revendications 1-6, **caractérisé en ce que** de l'acide acrylique, de l'acide méthacrylique, de l'acide allylsulfonique, de l'acide méthallylsulfonique et/ou de l'acide 2-acrylamido-2-méthylpropylsulfonique sont utilisés comme monomères a).

8. Procédé selon l'une des revendications 1 à 7, **caractérisé en ce que** des produits ayant un indice d'iode inférieur à 40, de préférence inférieur à 20, l'indice caractéristique ayant été déterminé selon DIN 53 241 Partie 1, sont utilisés comme composants graisses et huiles rendues hydrophiles.

9. Procédé selon l'une des revendications 1 à 8, **caractérisé en ce que** les composants graisses et huiles sont rendus hydrophiles par sulfonation ou sulfitation ou sulfatation ou alcoxylation.

10. Procédé selon l'une des revendications 1 à 9, **caractérisé en ce que** les composants graisses et huiles sont doublement rendus hydrophiles par une combinaison d'oxalkylation et de sulfatation ou de sulfonation ou de sulfitation.

11. Procédé selon l'une des revendications 1 à 10, **caractérisé en ce que** les groupes acides des monomères a) à insaturation monoéthylénique sont neutralisés, tout au moins en partie, avant, pendant ou après la polymérisation.

12. Procédé selon l'une des revendications 1 à 11, **caractérisé en ce que** la durée de polymérisation est de 1 à 10 heures.

13. Procédé selon l'une des revendications 1 à 12, **caractérisé en ce que** la polymérisation est amorcée à des températures allant de 0 à 40°C, de préférence 10 à 30°C.

14. Procédé selon l'une des revendications 1 à 13, **caractérisé en ce que** la polymérisation se poursuit de façon isotherme après obtention de la température maximale provoquée par la chaleur de polymérisation.

15. Procédé selon l'une des revendications 1 à 14, **caractérisé en ce que** le mélange est ajusté à une valeur de pH dans la plage de 5 à 9, après l'achèvement de la polymérisation.

16. Procédé selon l'une des revendications 1 à 15, **caractérisé en ce que** la préparation de polymérisation est ajustée, avec de l'ammoniaque ou une base alcaline aqueuse, à une valeur de pH située entre 6 et 7.

17. Procédé selon l'une des revendications 1 à 16, **caractérisé en ce qu'**après la polymérisation, au moins un composant hydrophobe est mélangé en une quantité totale de jusqu'à 60 % en poids, de préférence jusqu'à 40 en poids, par rapport au poids de la dispersion de polymères.

18. Procédé selon la revendication 17, **caractérisé en ce que** le composant hydrophobe est choisi dans le groupe des polysiloxanes, des graisses/huiles végétales, des graisses/huiles animales et des graisses/huiles techniques.

19. Dispersion aqueuse de polymères, obtenue par polymérisation selon les revendications 1 à 16 de a) monomères portant des groupes acides à insaturation monoéthylénique en présence de graisses et huiles végétales et/ou animales et/ou techniques rendues hydrophiles
éventuellement avec
b) d'autres monomères copolymérisables avec a).

20. Dispersion aqueuse de polymères selon la revendication 19, **caractérisée en ce que** la dispersion aqueuse de polymères contient sous forme émulsifiée un ou plusieurs composants hydrophobes supplémentaires en une quantité totale de jusqu'à 60 % en poids, de préférence jusqu'à 40 % en poids, par rapport au poids de la dispersion de polymères.

21. Polymérisation aqueuse selon la revendication 20, **caractérisée en ce que** les composés hydrophobes sont choisis dans le groupe des polysiloxanes, des graisses/huiles végétales, des graisses/huiles animales et des graisses/huiles techniques.

22. Utilisation des dispersions aqueuses de polymères selon l'une des revendications 1 à 16 pour émulsifier des composés hydrophobes.

23. Utilisation des dispersions aqueuses de polymères selon l'une des revendications 1 à 21 dans la production et le traitement du cuir et des peaux.
